# EUROPEAN PATENT APPLICATION

(11) **EP 1 777 650 A1**
(43) Date of publication of application: **25.04.2007**
(21) Application number: 05300829.8
(22) Date of filing: 17.10.2005
(51) Int. Cl.: G06Q 10/00

(54) **Data processing system and method**

(71) Applicant: Hewlett-Packard Development Company, L.P., Houston, TX 77070 (US)
(72) Inventor: Collomb, Jean-Michel, 06901, Sophia-Antipolis (FR)
(74) Representative: Lloyd, Richard Graham

(57) **Abstract**

A method is described for processing communications; the method comprising the step of displaying at least one communication within a viewing pane; the step of displaying comprising the step of accessing at least one index associated with the communication and accessing the at least one communication using the index.

## Description

### Field of the invention

The present invention relates to a data processing system and method and, more particularly, to such a system and method for processing electronic communications.

### Background to the invention

Within today's Internet enabled environment together with the availability of increasing bandwidth of various communication links, electronic communications represent an extremely convenient mode of exchanging information. The electronic communications include, for example, emails. People exchange emails with one another using an email application such as, for example, Microsoft Outlook in its in various guises.

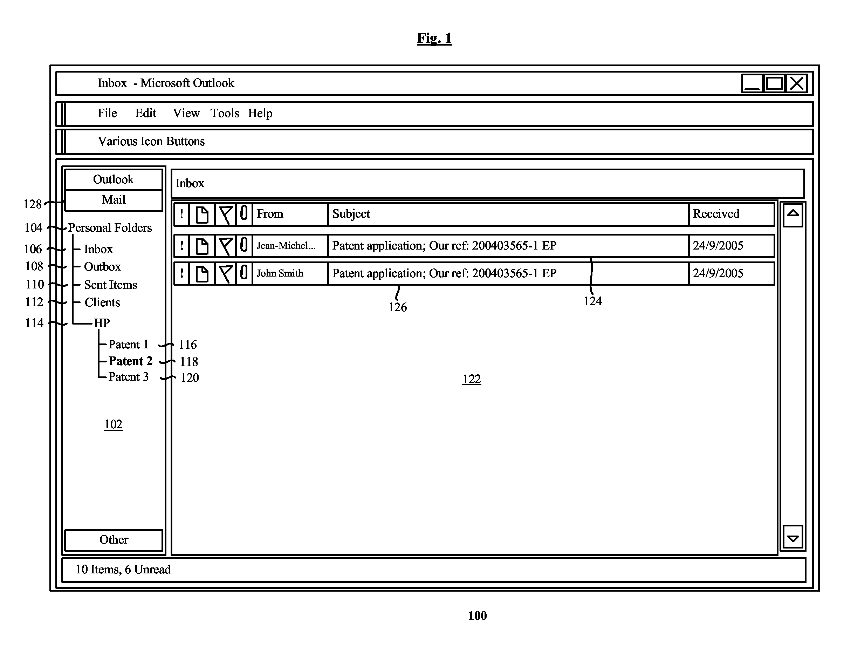

Typically, such mail management software allows a user to organise their emails in a convenient manner using the concept of folders. Referring to figure 1 there is shown a schematic representation 100 of conventional mail management software, Microsoft Outlook for instance. It can be appreciated that a folders pane 102 comprises a number of folders including the conventional personal folders 104, inbox folder 106, outbox folder 108 and sent items folder 110. The folders pane 102 also includes a user-defined folder, that is, a *"Clients"* folder 112. It can also be appreciated that the *"Clients"* folder 112 comprises a subfolder, that is, an *"HP"* folder 114, which, itself, comprises three further folders 116 to 120. The user-defined folders 112 are used by a user to organise their emails as they see fit. For example, the user may group any emails concerning a particular subject matter within one folder or, for example, the user may group all emails from a specific person under a respective folder. It will be appreciated that organising emails in such a manner will assist the user in understanding the context of an email such as, for example, in the first example in which emails are organised according to a particular subject, or in locating an email such as, for example, in the second example in which emails from the specific person can be readily retrieved.

In the schematic representation 100 of mail management software it can be appreciated that a viewing pane 122 shows a pair of emails 124 and 126 that are associated with a user-defined folder 118, which is shown as having been selected by the user via the bold font. It can be appreciated that the emails in the user-defined folder 118 are concerned with a common subject matter that, in the illustrated example, is a patent application having a reference of 200403565-1 EP. All correspondence relating to that subject matter is intended by the user to be grouped or stored within the user-defined folder 118.

While it is convenient to be able to store and group all emails according to user-defined groupings of folders, conventional email client are often such that it is necessary to store each email within a single folder. This can make stored email difficult to find, especially if it also relates to a subject other than the subject of the folder in which it is stored or to more than one subject. A user may be required to remember that a particular email, related to more than one subject, is stored in a particular folder with the consequence that finding emails relating to a subject other than that of the folder in which the email is stored can be time-consuming and cumbersome. In addition, there is the possibility that a discussion thread can be broken if emails from the same discussion thread are stored in different folders.

It is an object of embodiments of the present invention to at least mitigate one or more problems of the prior art or at least to provide a useful alternative.

### Summary of Invention

Accordingly, a first aspect of embodiments of the present invention provides a method for processing communications; the method comprising the step of displaying at least one communication within a viewing pane; the step of displaying comprising the step of accessing at least one index associated with the communication and accessing the at least one communication using the index.

A second aspect of embodiments of the present invention provides a data processing system for processing communications; the system comprising means to display at least one communication within a viewing pane; the means to display comprising means to access at least one index associated with the communication and means to access the at least one communication using the index.

Advantageously, multiple folders may contain respective references to the same email, that is, there can be a many to one relationship between the user-defined folders and a single email. This has the effect that the single email is accessible via any folder containing a reference to it.

It will be appreciated that embodiments of the present invention can be implemented in hardware or software or in combination thereof. The software may be stored in a convenient manner such as, for example, using optical or magnetic media or using a memory such as a non-volatile memory like a ROM or a programmable ROM or other form of rewritable memory. Suitably, embodiments provide a computer program comprising code for implementing a method or system as described in this specification as well as computer readable storage storing such a program.

Other features of embodiments of the present invention are described and claimed herein.

### Brief Description of the Drawings

Embodiments of the present invention will now be described, by way of example only, with reference to the accompanying drawings in which:
Figure 1 shows, schematically, mail management software;
Figure 2 shows an embodiment of a data processing system;
Figure 3 depicts a first arrangement of tags according to an embodiment;
Figure 4A shows a second arrangement of tags according to an embodiment;
Figure 4B shows an arrangement of unique identifiers associated with tags according to an embodiment;
Figure 5 illustrates hierarchically arranged tags according to an embodiment;
Figure 6 depicts a first view according to an embodiment; and
Figure 7 shows a relationship between a tag and a respective email according to an embodiment.

### Detailed Description of the Embodiments

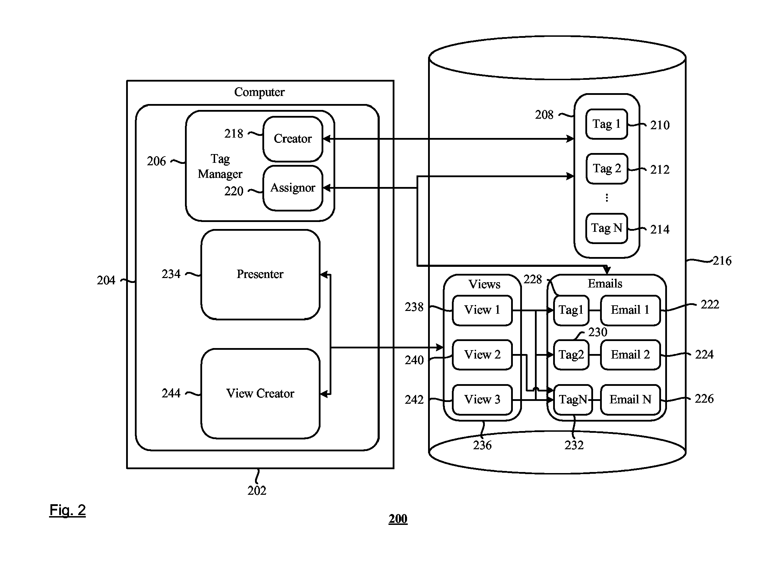

Referring to figure 2, there is shown a data processing system 200 for realising embodiments of the present invention. The data processing system 200 comprises a computer 202 running mail management software 204 according to an embodiment of the present invention. The mail management software 204 comprises a number of routines or modules responsible for performing various functions. A tag manager module 206 is responsible for creating and managing a plurality of tags 208 such as the tags 210 to 214 stored using non-volatile storage such as, for example, a hard disk drive (HDD) 216, accessible by the computer 202. Specifically, tag creation is a responsibility of a tag creator module or function 218. The tag manager module 206 also comprises an assignment module or assignor 220 that is responsible for creating an association between a tag selected from the plurality of tags 208 and a respective email.

The HDD 216 stores all of a user's emails 222 to 226 in a single place together with respective tags 228 to 232. The tags 228 to 232 are used as, that is, are embodiments of, indexes for accessing the emails 222 to 226 by a presentation manager module 234. A plurality of views 236, comprising three illustrated views 238 to 242, is used by the presentation manager 234 to display the emails in a manner analogous to that shown in figure 1. It will be appreciated that embodiments can be realised using any number of tags.

The mail management software 200 for also comprises a view creator module 244 for creating new views of the emails 222 to 226.

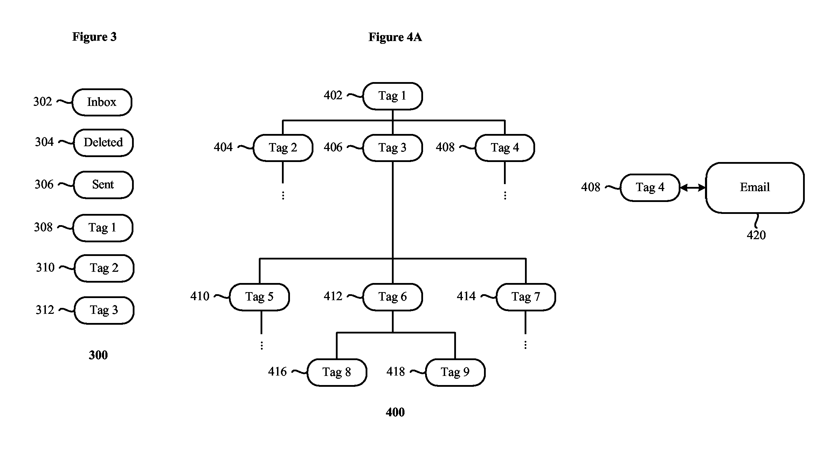

Referring to figure 3, there is shown an example of a plurality of tags 300 that could form the plurality of tags 208 described above. The plurality of tags 300 comprises an "*Inbox*" tag 302 for association with emails that have not, for example, been read and are merely within an inbox, a "*Deleted*" tag 304 to be associated with emails that have been deleted and a "*Sent*" tag 306 to be associated with emails sent by a user. Also illustrated are a number of other tags 308 to 312, which can be labelled and assigned to emails for such purposes as the user sees fit. Indeed, embodiments can be realised in which tags can be predefmed such as tags 302 to 306 described above or in which tags can be user defined or any combination thereof The further tags might comprise, for example, an "*Unread*" tag associated with those emails that have yet to be read. Once an email has been read, the "*Unread*" tag can be removed or changed to "*Read*".

The tag assignor 220 can assign tags to emails using, for example, automatically applied rules, that might be user defined or predefmed, or by picking a tag or tags from a graphical representation of the plurality of tags 208 using a GUI and a drag and drop arrangement. For example, all incoming emails can be automatically assigned an "*Inbox*" tag and all sent items can be automatically assigned a "*Sent*" tag. Alternatively, or additionally, the user might assign tags as they see fit selected with or without the aid of automatically applied rules, from the plurality of tags 210 or 300.

Figure 4A shows a plurality of tags 400, that could form the plurality of tags 208 described above, arranged in a data structure according to an embodiment. It can be appreciated that the illustrated example arranges the tags in a hierarchical manner. The plurality of tags 400A comprises nine illustrated tags 402 to 418 arranged in parent-child relationships within a tree structure. It will be appreciated that the data structure could comprise some other number of tags and that the data structure could be some other form of data structure such as, for example, a list, group or network of tags. The data structure can be user defined. The root node of the data structure is associated with or holds the first parent tag 402, which has three child tags 404 to 408, which themselves might have one or more respective child tags. However, only the second child tag 406 is shown as also being a parent tag having a number of child tags. Again, in the illustrated example, a second tag 412 comprises three child tags 410 to 414. However, some other number of child tags could be used or defined. It can be appreciated that the child tag 412 is also a parent tag relative to a number of other tags 416 and 418. In the illustrated embodiment, only two child tags 416 and 418 are illustrated for parent tag 412 even though some other number such as one or more could be used or defined. Figure 4A also shows a relationship between a tag 408 selected from the hierarchy and an email 420.

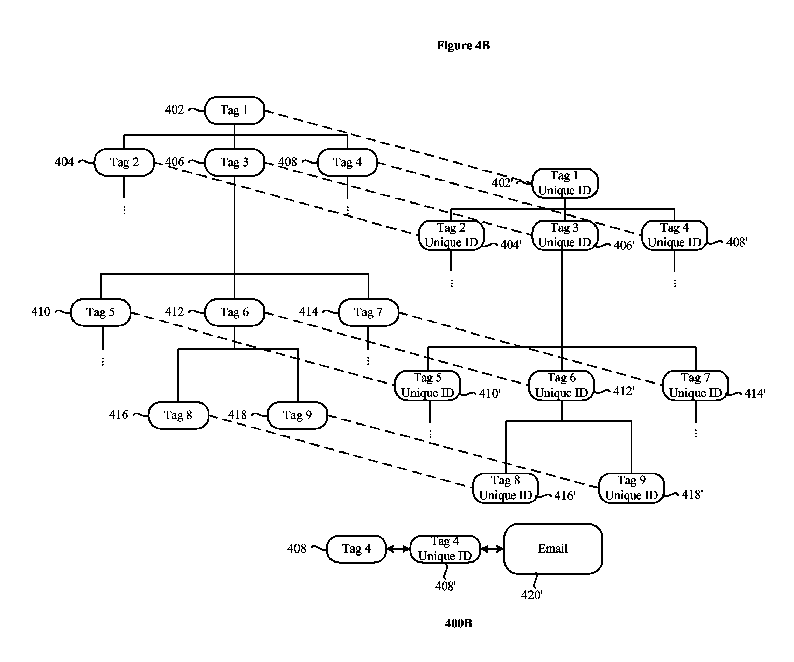

However, embodiments are preferably realised using unique identifiers associated with each tag. In the embodiments described herein, references to assigning a tag to an email should also be considered to be references to assigning the unique identifier associated with the tag to the email instead of assigning a tag itself. Figure 4B illustrates a data structure that relates tags with unique identifiers. The data structure has been shown as being hierarchical data structure for purposes of comparison with figure 4A, but is not limited to being a hierarchical data structure. Any data structure suitable for expressing a relationship between the tags and their unique identifiers could be used. For example, a simple table mapping a tag to a corresponding unique identifier could be used. Returning to figure 4B shows an association between the plurality of tags and their corresponding unique identifiers, that could form the plurality of tags 208 described above, arranged in a data structure according to an embodiment. It can be appreciated that the embodiment shows the tag's unique identifiers arranged in a in a hierarchical manner. The plurality of unique identifiers 400B comprises nine illustrated tag unique identifiers 402' to 418' arranged in parent-child relationships within a tree structure. It will be appreciated that the data structure could comprise some other number of unique identifiers and that the data structure could be some other form of data structure such as, for example, a list, group, table or network of unique identifiers. The data structure can be user defined. The root node of the data structure is associated with or holds the first parent tag unique identifier 402', which has three child unique identifiers 404' to 408', which themselves might have one or more respective child unique identifiers. However, only the second child unique identifier 406' is shown as also being a parent unique identifier having a number of child unique identifiers. Again, in the illustrated example, a second unique identifier 412' comprises three child unique identifiers 410' to 414'. However, some other number of child unique identifiers could be used or defined. It can be appreciated that the child unique identifier 412' is also a parent unique identifier relative to a number of other unique identifiers 416' and 418'. In the illustrated embodiment, only two child unique identifiers 416' and 418' are illustrated for parent unique identifier 412' even though some other number such as one or more could be used or defined. Figure 4B also shows a relationship between a tag 408 selected from the hierarchy, a corresponding tag unique identifier 408' and an email 420'.

An advantage of associating unique identifiers with emails as an intermediary between a user-friendly representation thereof, that is, a tag according to figure 4A, is that the user-friendly tags can be renamed without having to give effect to corresponding changes to corresponding tags associated with all emails. Furthermore, using unique tag identifiers allows multiple instances of tags having the same name to be accommodated. Therefore, conflict resolution issues will not arise merely because the data structure comprises a number of occurrences of the same tag such as, for example, *"Project".*

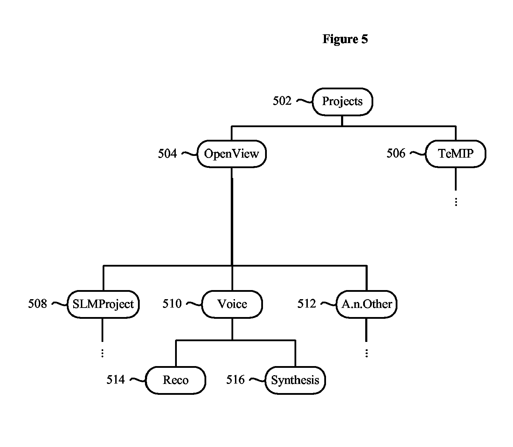

It can be appreciated that the hierarchy illustrated in figure 4A can be used to create meaningful associations between a user's day to day activities or projects and the emails they might expect to receive relating to the same. Accordingly, figure 5 shows an embodiment of the use of the data structure of figure 4A to organise emails associated with a number of projects. The root node of the hierarchy of tags 500 shown in figure 5 comprises a root tag 502. The root tag 502 has two child tags 504 and 506 that represent specific projects of the user. The first project is called OpenView, but could equally well be called by any other name and relate to any other project. The first project tag 504 has respective child tags whereas the other project tag 506, labelled "*TeMIP*", is not illustrated as bearing specific child tags, even though in practice it would bear such child tags. The first project tag 504 has three child tags, representing, for example, subprojects or activities of the project entitled "*OpenView*". Any other number of subprojects or activities could have been selected according to user requirements. The subprojects have associated tags 508 to 512 that relate to various, respective, aspects of the project *"OpenView".* Each subproject might have zero or more child tags. The second subproject 510 is illustrated as being associated with *"Voice"* aspects of the *"OpenView"* project. The *"Voice"* subproject is divided into two further subprojects or activities namely; voice recognition and speech synthesis; each having respective tags 514 and 516.

An email is assigned a tag selected from the available tags. An email might be associated with zero or more tags. For example, as soon as an email is received in the Inbox, it might be assigned an "*Inbox*" tag 304, pending being read or being assigned a different or additional tag. The user might assign such a different or additional tag by selecting, from the available tags, a tag of interest to be associated with the email. For example, assuming the email related to voice recognition aspects of the project "*OpenView*", the user (or a rule) might assign the "*Reco*" tag 514 to the email. In preferred embodiments, the assignor 220 might assign further tags representing the tag hierarchy or data structure. Therefore, the email assigned the "*Reco*" tag, might also be assigned zero or more of the tags *"Projects"* 502, "*OpenView*" 504 and "*Voice*" 510. Preferably, all tags above a specifically assigned tag within the hierarchy are also assigned to the email or at least a representation or qualification related to those tags is also assigned to the email of interest. In preferred embodiments, the tags at each node within a data structure are fully qualified names even though they preferably are presented to the user in an unqualified form. For example, the user is presented with "*Reco*" in figure 4A. The fully qualified tag name is "*Projects.OpenView.Voice.Reco*". A unique relationship between this fully qualified name and the user presented version, "*Reco*", of the fully qualified name exists. The same applies to as between the fully qualified name and the corresponding unique identifier. In preferred embodiments, the data structure is displayed to the user using only the unqualified name. However, if the user causes the cursor to hover over the unqualified name, the fully qualified name temporarily appears. Preferred embodiments use both fully qualified names together with unique identifiers.

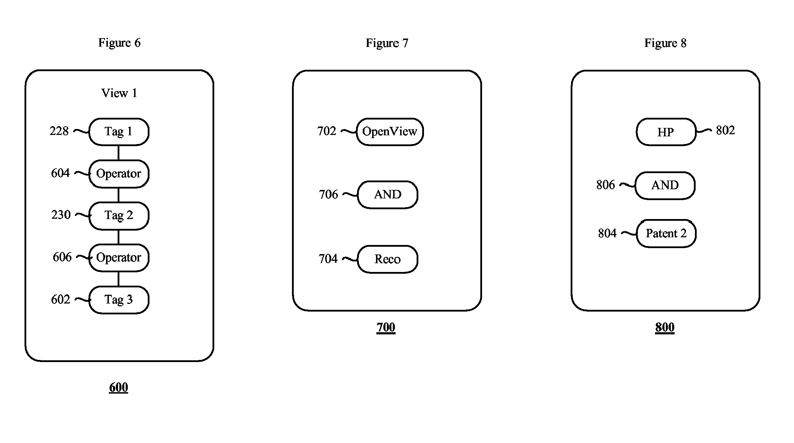

Referring to figure 6, there is shown, in greater detail, a view 600 such as, for example, the first view 238 of the plurality of views 236. The view 600 comprises one or more tags. In the illustrated embodiment, three tags are shown. It can be appreciated that the first two tags of the view 600 correspond to the first two tags 228 and 230 described above. There is also depicted a further tag 203. The further tag can take any tag value of the tags described above, defined by the user as part of a user-defined data structure relating to the tags or as prescribed by the system in the form of predefined tags. The tags are related, to form an expression, using one or more operators such as, for example, the schematic representations of the two operators 604 and 606 shown in the view 600 of figure 6. The operators 604 and 606 are used to construct an expression for evaluation. The result of evaluating the expression is to collate or at least identify emails matching or satisfying the expression represented by the combination of tags and operators. The operators can take the usual Boolean values of AND, OR, and NOT. For example, figure 7 shows a view 700 for locating all emails having the tags "*OpenView*" 702, derived from the corresponding tag 504 in the data structure 500, and "*Reco*" 704, derived from the corresponding tag 514 in the data structure 500. These two tags 702 and 704 are coupled by an "AND" operator. Therefore, all emails having both of these tags will be produced or identified by the view 700.

Embodiments can be realised in which the expressions represented by the views can be created and executed in real-time or created in advance and stored for future use such as, for example, as part of a pull-down menu or arrangement of folders 104 to 120 as described above with reference to figure 1.

Returning to figure 2, it can be appreciated that the relationship between the views 238 to 242 and the emails 222 to 226 can take the form of a one-to-one relationship such as that shown between the second view 240 and the Nth email 226 or a one to many relationship such as that between the first view 238 and all of the emails 222 to 226 depicted. It is possible to realise relationships between multiple views and a single email, that is, a many to one relationship can be established between a number of views and a single email. Since the emails are no longer sorted, physically, into respective folders, each of the user-defined folders 116 to 120 can depict or at least access the same email. Furthermore, this is achieved without the need to duplicate an email itself. It will be appreciated that the tags within the views 238 to 242 represent embodiments of indexes that are used to access the emails 222 to 226.

Figure 8 shows an embodiment of a view 800 that is related to the hierarchical structure of the folders shown in figure 1. It can be appreciated that the view 800 comprises a pair of tags 802, *"HP"*, and *"Patent* 2" 804 coupled by an AND operator 806. The *"Mail"* shortcut 128 showing the various folders available can be constructed using views. For example, the view 800 might be intended to display all emails relating to a particular Hewlett-Packard patent; namely, "*Patent 2*"*.* In the illustrated example, two emails are displayed in the viewing pane 122 in response to invoking or evaluating the expression or view 800 associated with or defining folder 118.

The hierarchical relationship described above can be extended by, in effect, nesting views.

The presentation manager is arranged to provide substantially the same functionality, at least in terms of manipulating emails, as that provided by a conventional mail management program subject to the manipulations being in relation to or using the views and tags.

It can be appreciated that the above embodiments require the emails 222 to 226 to be tagged or indexed, that is, tags are associated with incoming and outgoing emails that can be used to index or access those emails. The process of assigning tags to emails is the responsibility of the tag assignor 220. In a manner analogous to, for example, the rules supported by Microsoft Outlook for automatically assigning incoming emails to respective or defined folders, the assignor 220 can be arranged to automatically tag an email and associate that tag with a selected view by including the newly created tag within that view. This function is performed in conjunction with the view creator 244, which uses the newly created tag, assigned by the assignor 222 to a newly created or incoming email, to modify one or more views expressed, via rules, to be associated with such a newly created or incoming email. The view creator 244 is also arranged to present a graphical user interface for defining views in a manner analogous to defming new folders within Microsoft Outlook. The view creator populates a view template data structure (not shown) with tags associated with emails intended to form or intended to be rendered as part of the view. The view creator 244 also allows assignment of a graphical representation to a view.

The above embodiments have been described with reference to emails. It will be appreciated that emails are merely one embodiment of a communication. Embodiments can be realised using other electronic communications such as, for example, faxes.

Although the embodiments described herein relate to projects, embodiments of the invention are not limited thereto. Embodiments can be realised in which the tags additionally or alternatively relate to people. Using tags that relate to people allows emails from a particular individual to be located using a view having a single tag associated with a respective individual of interest.

## Claims

1. A method for processing communications; the method comprising the step of displaying at least one communication within a viewing pane; the step of displaying comprising the step of accessing at least one index associated with the communication and accessing the at least one communication using the index.

2. A method as claimed in claim 1 comprising the step of receiving the at least one communication and creating the association between the at least one communication and the at least one index.

3. A method as claimed in claim 2 in which the step of creating comprises selecting the at least one index from a plurality of indexes and linking the selected at least one index and the at least one communication.

4. A method as claimed in any preceding claim comprising creating a plurality of indexes including the at least one index associated with the at least one communication.

5. A method as claimed in claim 4 in which the step of creating the plurality of indexes comprises the step of creating a data structure representing associations between the indexes of the plurality of indexes.

6. A method as claimed in claim 5 in which the step of creating the plurality of indexes comprises creating a hierarchy of indexes.

7. A method as claimed in any preceding claim comprising forming an expression for accessing the at the least one communication comprising selecting at least one index and in which the step of accessing comprises evaluating the expression to support access to the at least one communication.

8. A method as claimed in claim 7 in which the expression comprises the at least one index.

9. A method as claimed in claim 8 in which the expression comprises at least a pair of indexes, including the at least one index, linked by an operator.

10. A method as claimed in any preceding claim comprising the step of associating a further index with the at least one communication.

11. A method as claimed in claim 10 in which the step of accessing comprises creating and evaluating an expression comprising at least the further index to support access to the at least one communication.

12. A method as claimed in any preceding claim comprising the step of associating the at least one index with a further communication.

13. A system comprising means to implement a method as claimed in any preceding claim.

14. A computer program comprising code for implementing a system or method as claimed in any preceding claim.

15. Computer-readable storage storing a computer program as claimed in claim 14.
